# FASCICULE DE BREVET EUROPEEN

(11) **EP 0 581 687 B1**
(45) Date de publication et mention de la délivrance du brevet: **08.05.1996**
(21) Numéro de dépôt: 93401982.9
(22) Date de dépôt: 30.07.1993
(51) Int. Cl.: B62D 65/00, B65G 17/20, B65G 49/04

(54) **Dispositif de transport de pièces volumineuses**
Vorrichtung zum Transport volumimöser Teile
Device for transportation for large-sized pieces

(30) Priorité: 31.07.1992 FR 9209577
(43) Date de publication de la demande: 02.02.1994
(73) Titulaire: VERI S.A., F-92150 Suresnes (FR)
(72) Inventeur: Riat, Jean-Paul, F-92000 Nanterre (FR)
(74) Mandataire: Dronne, Guy

(56) Documents cités:
- FR-A- 2 588 837
- GB-A- 2 088 304

## Description

La présente invention a pour objet un dispositif de transport de pièces volumineuses.

Il existe de nombreux cas où il est nécessaire de transporter sur une longueur et de façon répétitive des objets volumineux en vue de leur faire subir différentes étapes de traitement. C'est notamment, dans les installations de constructions automobiles, le cas des caisses de véhicules automobiles qui doivent subir différents traitements . On peut citer, en particulier, les opérations de phosphatation et les opérations d'électrophorèse. Pour cela, le dispositif de transport doit permettre le déplacement des caisses des véhicules selon un chemin déterminé pour traverser la cuve de phosphatation ou le tunnel d'electrophorèse.

On connait déjà de tels dispositifs notamment par le brevet français N° 2 588 837 qui décrit un dispositif de transport tel que défini dans le préambule de la revendication 1, dans lequel la luge sur laquelle est placée la caisse de véhicule à déplacer est reliée de façon amovible à quatre bras pendulaires entrainés par des convoyeurs horizontaux. Les quatres bras sont indépendants et leur extrémité inférieure doit être raccordée à quatre parties précises de la luge afin de permettre l'entrainement de la caisse à traiter. Une telle disposition présente, en particulier, l'inconvénient que les quatre bras étant totalement indépendants, l'opération d'accrochage de la luge à l'extrémité de ces bras est délicate. En outre, la largeur de l'installation doit être sensiblement plus grande que la largeur des luges recevant les caisses à transporter pour permettre l'accrochage des bras. Cela implique corollairement que par exemple, le tour de cuisson du produit d'électrophorèse doit lui-même avoir des dimensions transversales plus importantes ce qui est bien sûr pénalisant pour le coût total de l'installation de traitement.

Un autre inconvénient notoire est le manque de fiabilité de la continuité électrique, nécessaire dans le tunnel d'électrophorèse, qui ne peut être assurée que par des pièces en rotation obligeant un contact dynamique dans un milieu hostile (dépôt de peinture) lié mécaniquement à l'inclinaison de la luge par rapport aux bras.

Un objet de la présente invention est de fournir un dispositif de transport d'objets volumineux, notamment de caisses de véhicules qui tout en présentant les avantages liés à deux ensembles d'entrainement horizontaux à dégagement latéraux, permette néanmoins un accrochage aisé de la luge recevant les pièces à transporter sur les ensembles d'entrainement par convoyeur.

Pour atteindre ce but, selon l'invention, le dispositif de transport de pièces volumineuses comprenant
deux ensembles d'entrainement sans fin, parallèles entre eux, les brins aller et retour desdits ensembles d'entrainement étant tous disposés dans un même plan horizontal et entrainés en synchronisme ;
deux paires de bras verticaux de supportage, une première extrémité de chaque bras d'une même paire étant solidarisée avec le premier ensemble d'entrainement et une première extrémité des bras de la deuxième paire étant solidarisée avec ledit deuxième ensemble d'entrainement caracterisé en ce qu'il comporte en outre :
deux traverses horizontales, chaque traverse ayant ses extrémités solidarisées avec les deuxièmes extrémités des bras de supportage d'une même paire de bras ;
une plate-forme amovible apte à recevoir un desdits objets, ladite plate-forme comportant sur ses deux côtés parallèles au sens de déplacement, des moyens de coopération avec lesdites traverses ; et
des moyens commandables de verrouillage pour verrouiller ladite plate-forme sur lesdites traverses.

On comprend qu'avec le dispositif défini ci-dessus, on bénéficie effectivement des avantages des installations constituées par deux convoyeurs parallèles horizontaux ce qui réduit considérablement l'encombrement vertical de l'installation tout en autorisant un accrochage aisé de la plate-forme ou luge aux extrémités des quatre bras de supportage assurant l'entrainement de la plate-forme en raison de la présence de la traverse reliant les extrémités inférieures des bras d'une même paire.

Dans le cas du tunnel délectrophorèse, la traverse d'une même paire de bras est reliée par des tresses métalliques auxdits bras ; des ressorts à lames fixés sur ladite traverse en contact avec la plate-forme décrite ci-dessous assurent la continuité électrique par un contact permanent et statique quelle que soit l'inclinaison desdites traverses par rapport auxdits bras.

D'autres caractéristiques et avantages de l'invention apparaîtront plus clairement à la lecture de la description qui suit, d'un mode préféré de réalisation de l'invention, donné à titre d'exemples non limitatifs. La description se réfère aux figures annexées sur lesquelles :
- la figure 1 est une vue de dessus de l'ensemble du dispositif de transport sous une forme simplifiée ;
- la figure 2 est une vue en perspective d'une partie du dispositif de transport montrant les paires de bras de supportage et la luge de transport ;
- la figure 3 est une vue de dessus de la partie du dispositif montrée sur la figure 2 ;
- la figure 4 est une vue en élévation verticale montrant la luge en position verrouillée sur les bras de supportage ;
- la figure 5 est une vue semblable à celle de la figre 4 montrant la luge séparée des bras de supportage ; et
- la figure 6 montre un exemple de réalisation des moyens de verrouillage de la luge sur les bras de supportage ; et
- la figure 7 représente le principe de la prise de courant pour l'électrophorèse.

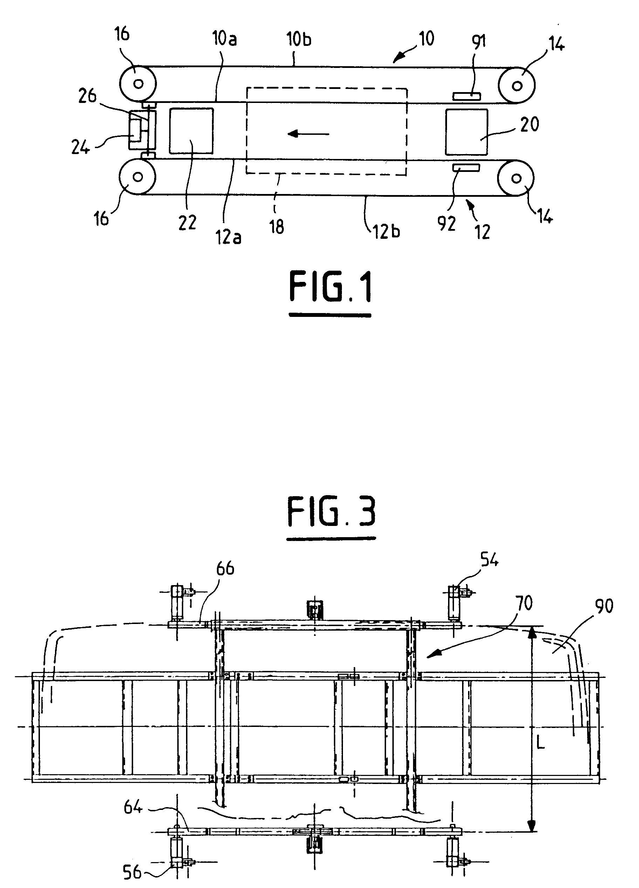

En se référant tout d'abord à la figure 1, on va décrire le principe du dispositif de transport. Il comporte deux ensembles d'entrainement ou convoyeurs 10 et 12 qui sont parallèles. Chaque convoyeur comporte bien sûr un brin aller 10a,12a et un brin retour 10b,12 b. L'ensemble des quatre brins des convoyeurs sont disposés sensiblement sur un même plan horizontal. De préférence, les deux convoyeurs sont du type "à chaîne matricée". Sur cette figure, on a représenté schématiquement les poulies d'extrémité des deux convoyeurs qui sont respectivement référencées 14 et 16. On comprend qu'ainsi, l'encombrement vertical du dispositif est sensiblement limité à la longueur des bras puisque le retour se fait latéralement.

Sur la figure 1, on a également représenté en pointillés la zone utile de travail 18 dans laquelle sont traitées les pièces transportées par le dispositf de transport. Il s'agit par exemple d'une cuve de phosphatation ou d'un tunnel d'électrophorèse. Sur cette figure, on a également représenté une première table élévatrice 20 installée à l'entrée de la zone de traitement 18 et servant à charger les luges sur les paires de bras du dispositif de transport et une table élévatrice 22 pour le déchargement de ces mêmes luges à la sortie de la zone de traitement. Enfin, sur cette figure, on a représenté schématiquement le moteur 24 d'entrainement des deux convoyeurs 10 et 12 et également, le système de transmission 26 entre la sortie du moteur et les deux convoyeurs pour assurer un déplacement synchronisé des deux convoyeurs.

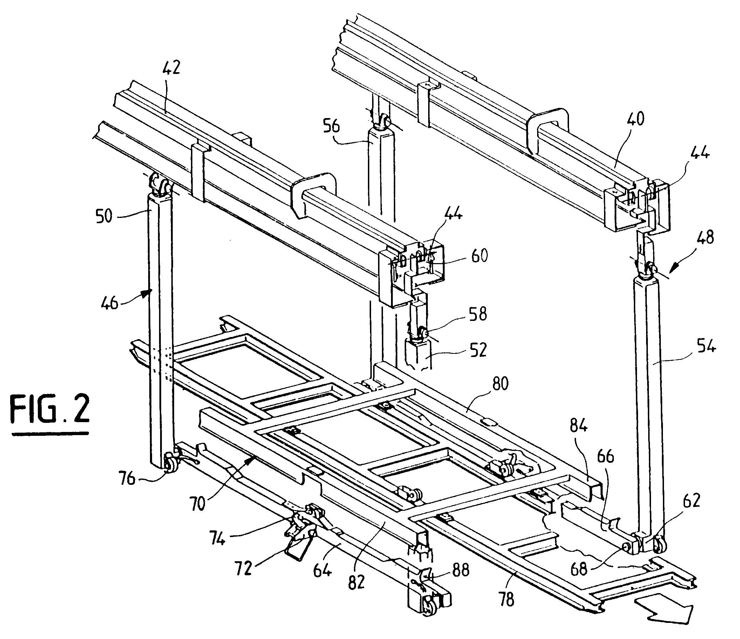

Sur la figure 2, on a représenté les deux rails parallèles 40 et 42 correspondant aux brins aller des deux convoyeurs 10 et 12. De façon connue, dans ces rails sont engagés des galets de guidage 44 coopérant avec des chemins de roulement. Les galets sont reliés entre eux par des chaînes d'entrainement non représentées sur les figures. Selon l'invention, deux paires de bras de supportage pendulaires respectivement référencées 46 et 48 sont respectivement suspendues à chacun des convoyeurs. La paire 46 comporte les bras 50 et 52 alors que la paire 48 comporte les bras 54 et 56. L'extrémité supérieure de chaque bras est raccordée aux galets de roulement 44 par une double articulation 58,60 présentant des axes d'articulation orthogonaux entre eux. L'extrémité inférieure (a) de chaque bras 50 à 56 comporte un prolongement 62 tourné vers l'intérieur pour la fixation des extrémités de deux traverses horizontales 64 et 66. Ces traverses sont montées à leurs extrémités sur des axes de pivotement 68 solidaires de chacun des prolongements 62 des bras de supportage. Ainsi, les traverses 64 et 66 sont assujetties à rester parallèles au sens de déplacement des deux convoyeurs, du moins dans la phase active de transport. Par ailleurs, les traverses 64 et 66 assurent une solidarisation avec possibilité d'articulation entre les extrémités inférieures a des paires de bras 46 et 48.

L'ensemble constitué par une paire de bras et sa traverse associée forme donc un parallélogramme déformable permettant d'"absorber" les portions en pente des convoyeurs.

Comme on l'expliquera ultérieurement, les traverses 64 et 66 ont pour fonction de supporter et de recevoir les plate-formes ou luges 70 sur lesquelles ont été préalablement disposées les pièces à transporter, par exemple, les caisses de véhicules automobiles.Dans sa partie centrale, chaque traverse 64, 66 comporte des pièces de fixation telles que 72 pour le montage à pivotement de verrous 74 qui seront décrits ultérieurement plus en détails et qui servent à verrouiller la luge 70 sur chacune des traverses 64, 66.

Comme on le voit également sur la figure 2, chaque bras 50 à 56 est muni d'un galet de guidage 76 dont la fonction sera explicitée ultérieurement.

Selon le mode de réalisation présentement décrit, la luge 70 est constituée par deux cadres 78 et 80 solidaires l'un de l'autre. Le cadre 80 comporte deux longerons externes 82 et 84 constitués de préférence par des fers à section en U, l'ouverture de la section étant tournée vers le bas. L'écartement entre les deux longerons 82 et 84 est égale à la distance qui sépare les deux traverses 64 et 66 lorsque les bras de supportage sont en position verticale. Ainsi, il est possible de venir placer la luge de telle manière que les longerons 82 et 84 viennent s'engager sur les traverses 64 et 66 en reposant sur celles-ci. Des butées telles que 88 permettent d'immobiliser en translation la luge par rapport aux traverses 64 et 66. Comme on l'a déjà indiqué, l'immobilisation verticale de la luge sur les traverses est réalisée par les organes de verrouillage 74.

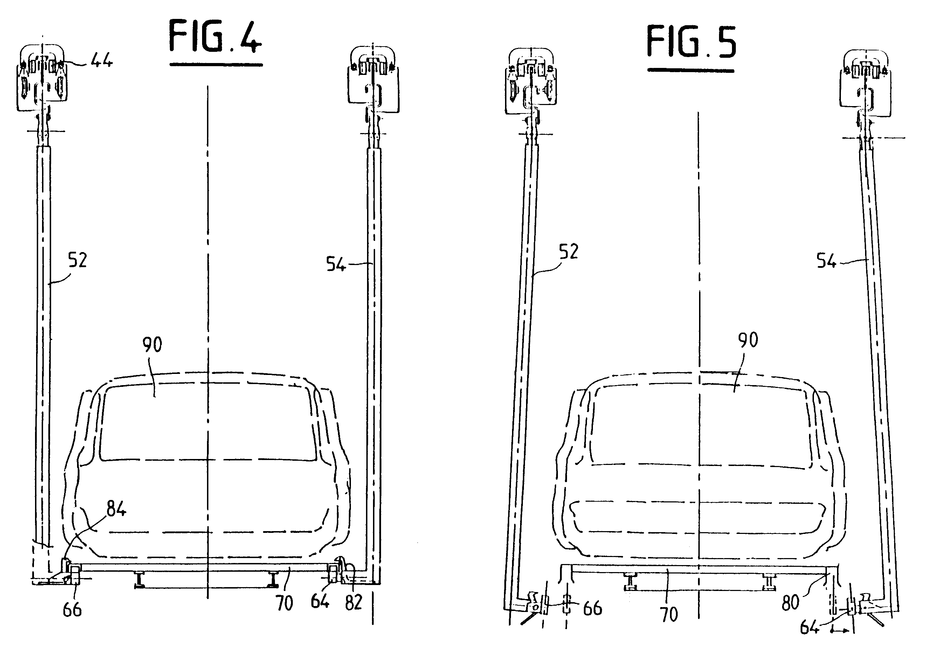

La figure 3 montre la plate-forme ou luge 70 suspendue à l'extrémité des bras 50 à 56 reliés eux-mêmes par paire par les traverses 64 et 66. Sur la luge, on a représenté en pointillés une caisse 90 de véhicule automobile à transporter. Comme on le voit aisément sur cette figure, la distance transversale L entre les deux traverses 64 et 66 est sensiblement égale à la largeur de la caisse grâce au mode de fixation de la luge sur les traverses des bras verticaux. Comme on l'a déjà indiqué, cette disposition permet de diminuer très sensiblement la largeur des installation de traitement des objets transportés.

La figure 4 est une vue en élévation du dispositif de transport en position active. Comme on le voit sur cette figure, la luge 70 est engagée sur les traverses 64 et 66 par l'intermédiaire des longerons 82 et 84.

En revanche, la figure 5 montre les bras de supportage, par exemple 52 et 54, en position écartée. L'écartement par rapport à la verticale est provoqué par la présence de rampes de guidage d'écartement qui coopèrent avec les galets 76 montés à l'extrémité de chaque bras de supportage. On comprend que dans cette position écartée des bras on peut, à l'aide de la table élévatrice, provoquer la montée ou la descente de la luge selon la direction verticale. Cela permet de dégager la luge des traverses 64 et 66.

Lorsque les bras ou plus précisément les paires de bras 46 et 48 sont entrainés par les brins retour 10b et 12b des convoyeurs 10 et 12, c'est-à-dire lorsque les luges ne sont plus montées sur les paires de bras de supportage, les bras sont en position écartée par coopération des galets 76 avec des rampes de guidage convenables non représentées. En revanche, d'autres rampes de guidage visibles sous une forme simplifiée sur la figure 1 et référencées 91 et 92 sont prévues de part et d'autre de la table élévatrice 20 de chargement des luges sur les bras de supportage. Ces rampes agissant sur les galets 76 des paires de bras permettent le positionnement vertical des paires de bras pour faciliter l'engagement des longerons 82 et 84 des luges sur les traverses reliant les paires de bras. Une fois que l'engagement a été réalisé et que les verrous 74 sont en position verrouillée, les deux traverses sont maintenues l'une par rapport à l'autre, par la luge 70 elle-même. Il n'est donc plus nécessaire de prévoir de rampes de guidage des paires de bras.

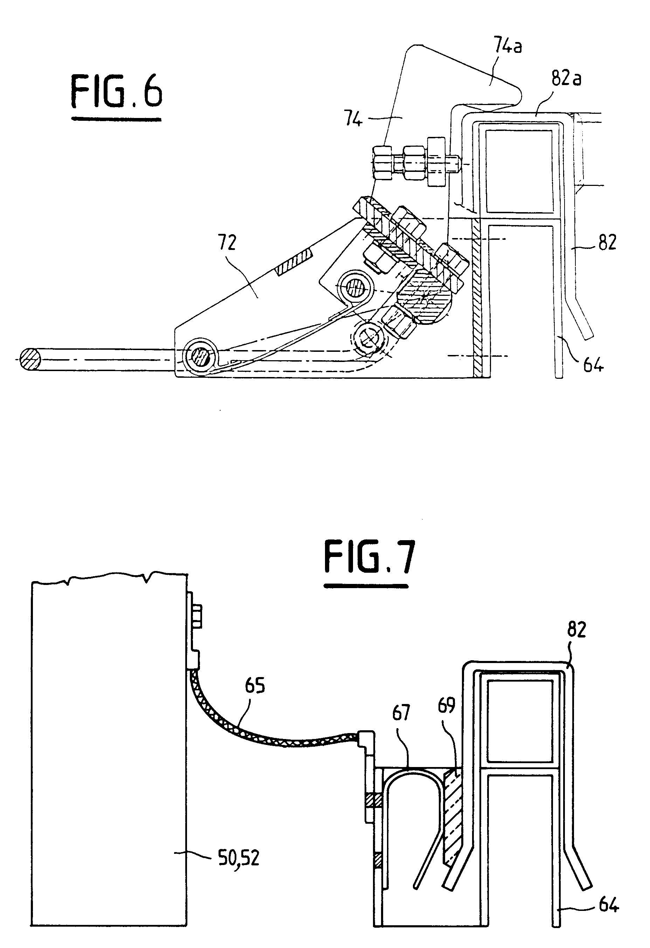

La figure 6 montre un exemple de réalisation du dispositif de verrouillage. Il comprend un crochet 74 monté pivotant sur deux éléments de fixation 72 solidaire de la traverse 64 (ou 66). En position verrouillée, la tête 74a du crochet vient en appui sur la face supérieure 82a du longeron 82. Ce dernier est donc plaqué sur la face supérieure de la traverse 64.

La figure 7 représente le principe de la prise de courant pour la continuité électrique dans le tunnel d'électrophorèse. Ce dispositif comprend deux tresses métalliques 65 fixées, d'une part, sur les bras 50 et 52 et, d'autre part, sur la traverse 64 pour la liaison bras-traverse, et de deux ressorts à lame 67 assurant un contact électrique statique permanent sur un patin 69 fixé sur le longeron 82. On réalise ainsi une prise de courant simple et efficace qui absorbe aisément les mouvements relatifs entre les bras de supportage 50, 52 et la traverse correspondante 64.

## Revendications

1. Dispositif de transport de pièces volumineuses comprenant
deux ensembles d'entrainement sans fin (10, 12) parallèles entre eux, les brins aller (10a, 12a) et retour (10b, 12b) desdits ensembles d'entrainement étant tous disposés dans un même plan horizontal et entrainés en synchronisme,
deux paires de bras (46,48) verticaux de supportage, une première extrémité des bras (50, 52) d'une première paire étant solidarisée avec le premier ensemble d'entrainement (10) et une première extrémité des bras (54, 56) de la deuxième paire (48) étant solidarisée avec ledit deuxième ensemble d'entrainement (12) caractérisé en ce qu'il comporte en outre :
deux traverses horizontales (64,66), chaque traverse ayant ses extrémités solidarisées avec les deuxièmes extrémités (a) des bras de supportage (50, 52, 54, 56) d'une même paire ;
une plate-forme amovible (70) apte à recevoir une desdites pièces, ladite plate-forme comportant sur deux de ses côtés parallèles au sens de déplacement des moyens de coopération (82,84) avec lesdites traverses ; et
des moyens commandables de verrouillage (74) pour verrouiller ladite plate-forme sur lesdites traverses.

2. Dispositif de transport selon la revendication 1, caractérisé en ce que lesdits ensembles d'entrainement sans fin (10, 12) sont des convoyeurs à chaîne.

3. Dispositif de transport selon l'une quelconque des revendications 1 et 2, caractérisé en ce que les moyens de coopération de ladite plate-forme (70) comprennent deux longerons (80, 82) solidaires de ladite plate-forme et disposés de chaque côté de celle-ci et parallèles à la direction de déplacement, lesdits longerons ayant une section droite en forme de U ouvert vers le bas, chaque longeron étant apte à s'engager sur la traverse correspondante (62,64).

4. Dispositif de transport selon la revendication 3, caractérisé en ce que lesdites pièces volumineuses sont des caisses (90) de véhicules automobiles et en ce que la distance entre les deux longerons (80, 82) est sensiblement égale à la largeur de la caisse.

5. Dispositif de transport selon l'une quelconque des revendications 1 à 4, caractérisé en ce que les extrémités supérieures des bras de supportage sont articulées (58) pour permettre l'écartement des paires de bras.

6. Dispositif de transport selon l'une quelconque des revendications 1 à 5, caractérisé en ce que les extrémités desdites traverses (64, 66) sont articulées sur les extrémités inférieures desdits bras (50 à 56).

7. Dispositif de transport selon l'une quelconque des revendications 1 à 6, caractérisé en ce qu'il comprend en outre au moins un conducteur électrique déformable (65) reliant au moins un desdits bras (50, 52) à la traverse (64) correspondant auxdits bras et des moyens conducteurs électriques élastiques (67) dont une extrémité est solidaire de ladite traverse (64) et dont l'autre extrémité est appliquée contre un desdits moyens de coopération (82, 84) lorsque ceux-ci coopèrent avec ladite traverse (64).

## Claims

1. Device for the transport of bulky parts including
- two endless driving assemblies (10, 12) parallel to each other, the forward runs (10a, 12a) and return runs (10b, 12b) of said driving assemblies all being arranged in the same horizontal plane and driven in synchronisation,
- two pairs of vertical supporting arms (46, 48), a first end of the arms (50, 52) of a first pair being rigidly connected to the first driving assembly (10) and a first end of the arms (54, 56) of the second pair (48) being rigidly connected to said second driving assembly (12);
characterised in that it further comprises:
- two horizontal crossbars (64, 66), each crossbar having its ends rigidly connected to the second ends (a) of the supporting arms (50, 52, 54, 56) of the same pair;
- a removable platform (70) capable of receiving one of said parts, said platform comprising, on two of its sides parallel to the direction of displacement, means (82, 84) for cooperating with said crossbars; and
- locking control means (74) for locking said platform on said crossbars.

2. Transport device according to claim 1, characterised in that said endless driving assemblies (10, 12) are chain conveyors.

3. Transport device according to either of claims 1 and 2, characterised in that the cooperating means of said platform (70) include two side rails (80 82) rigidly connected to said platform and arranged on either side thereof and parallel to the direction of displacement, said side rails having a U shaped cross-section opening downwards, each side rail being capable of engaging on the corresponding crossbar (62, 64).

4. Transport device according to claim 3, characterised in that said bulky parts are bodies (90) of automobile vehicles and in that the distance between the two side rails (80, 82) is substantially equal to the width of the body.

5. Transport device according to any of claims 1 to 4, characterised in that the upper ends of the supporting arms are hinged (58) to allow divergence of the pairs of arms.

6. Transport device according to any of claims 1 to 5, characterised in that the ends of said crossbars (64, 66) are hinged to the lower ends of said arms (50 to 56).

7. Transport device according to any of claims 1 to 6, characterised in that it further includes at least one deformable electrical conductor (65) connecting at least one of said arms (50, 52) to the crossbar (64) corresponding to said arms and elastic electrical conductor means (67) of which one end is rigidly connected to said crossbar (64) and of which the other end is applied to one of said cooperating means (82, 84) when the latter cooperate with said crossbar (64).

## Patentansprüche

1. Vorrichtung zum Transport voluminöser Teile, mit
zwei zueinander parallelen, endlosen Fördereinrichtungen (10, 12), deren vorlaufende Trume (10a, 12a) und rücklaufende Trume (10b, 12b) alle in derselben horizontalen Ebene angeordnet und synchron angetrieben sind,
zwei Paaren senkrechter Stützarme (46, 48), wobei ein erstes Ende der Arme (50, 52) eines ersten Paares mit der ersten Fördereinrichtung (10) verbunden ist und ein erstes Ende der Arme (54, 56) des zweiten Paares (48) mit der zweiten Fördereinrichtung (12) verbunden ist, dadurch gekennzeichnet, daß sie darüber hinaus umfaßt:
zwei Horizontaltraversen (64, 66), wobei die Enden jeder Traverse mit den zweiten Enden (a) der Stützarme (50, 52, 54, 56) eines gleichen Paares verbunden sind,
eine abnehmbare, bewegbare Bühne (70) zum Aufnehmen eines der genannten Teile, wobei die Bühne an zwei ihrer in Bewegungsrichtung parallelen Seiten Mittel (82, 84) zum Zusammenwirken mit den Traversen hat, und
steuerbare Verriegelungsmittel (74) zum Verriegeln der Bühne auf den Traversen.

2. Transportvorrichtung nach Anspruch 1, dadurch gekennzeichnet, daß die endlosen Fördereinrichtungen (10, 12) Kettenförderer sind.

3. Transportvorrichtung flach einem der Ansprüche 1 und 2, dadurch gekennzeichnet, daß die Mittel zum Zusammenwirken der Bühne (70) zwei Längsträger (80, 82) umfassen, die einstückig mit der Bühne ausgeführt und auf jeder Seite derselben und parallel zur Bewegungsrichtung angeordnet sind, wobei die Längsträger einen U-förmigen, nach unten hin offenen Querschnitt aufweisen, und wobei jeder Längsträger zum Eingreifen in die entsprechende Traverse (62, 64) ausgeführt ist.

4. Transportvorrichtung nach Anspruch 3, dadurch gekennzeichnet, daß die voluminösen Stücke Fahrzeugkarosserien (90) sind, und daß der Abstand zwischen den zwei Längsträgern (80, 82) genau der Breite der Karosserie entspricht.

5. Transportvorrichtung nach einem der Ansprüche 1 bis 4, dadurch gekennzeichnet, daß die oberen Enden der Stützarme mit Gelenken (58) versehen sind, um eine Entfernung der Armpaare zu erlauben.

6. Transportvorrichtung nach einem der Ansprüche 1 bis 5, dadurch gekennzeichnet, daß die Enden der Traversen (64, 66) an den unteren Enden der Arme (50 bis 56) angelenkt sind.

7. Transportvorrichtung nach einem der Ansprüche 1 bis 6, dadurch gekennzeichnet, daß sie darüber hinaus zumindest eine biegsame elektrische Leitung (65), die zumindest einen der Arme (50, 52) mit der diesen Armen zugehörigen Traverse (64) verbindet, und elastische elektrische Leitmittel (67) aufweist, deren eines Ende einstückig mit der Traverse (64) ist und deren anderes Ende gegen eine der Mittel zum Zusammenwirken (82, 84) gelegt wird, wenn diese mit der Traverse (64) zusammenwirken.
